# EUROPEAN PATENT SPECIFICATION

(11) **EP 2 821 324 B1**
(45) Date of publication and mention of the grant of the patent: **16.03.2016**
(21) Application number: 14175921.7
(22) Date of filing: 07.07.2014
(51) Int. Cl.: B62D 11/20, B62D 15/00, B64F 1/32, B65G 65/00

(54) **Method for transporting an object with an automatically controllable vehicle in an object processing system, vehicle and object processing system.**
Verfahren zum Transportieren eines Objekts mit einem automatisch steuerbaren Fahrzeug in einem Objektverarbeitungssystem, Fahrzeug und Objektverarbeitungssystem
Procédé pour le transport d'un objet par un véhicule à contrôle automatique dans un système de traitement d'objets, véhicule et système de traitement d'objets

(30) Priority: 05.07.2013 NL 2011114
(43) Date of publication of application: 07.01.2015
(73) Proprietor: Vanderlande Industries B.V., 5466 RB Veghel (NL)
(72) Inventor: Weijenberg, Gaston Joseph Anne Marie, 6942 EA Didam (NL)
(74) Representative: Algemeen Octrooi- en Merkenbureau B.V.

(56) References cited:
- EP-A1- 1 112 913
- DE-A1-102010 007 014
- NL-C2- 1 033 273
- US-A- 5 456 332
- US-B2- 7 055 672

## Description

The present invention relates to a method for transporting an object such as an item of luggage or goods similar thereto such as a parcel with an automatically controllable vehicle in an object processing system, such as a processing system for items of luggage or goods similar thereto such as parcels.

In the automated processing of items of luggage at airports the application of conveyor belts forming a carrying surface for the items of luggage is usual. Where transport routes for instance come together or branch apart or in the case of other operations, such as having an item of luggage pass from a first conveyor belt to a further conveyor belt, it is important that the orientation of the item of luggage is adjusted to the direction of transport of the conveyor on which the item of luggage is situated. This is understood to mean that sides of a generally rectangular item of luggage or for instance parcel extend roughly parallel to or transversely of the conveying direction of the conveyor belt as seen from above. Commonly used for this purpose are so-called vertical belts. A known vertical belt is disclosed in WO 2005/054096 A1. Such vertical belts are provided on a pivot arm and can pivot over the carrying surface of the conveyor in order, subject to an orientation of an item of luggage determined with sensing means, to enter into physical contact with this item of luggage with one or more of such vertical belts so as to manipulate the item of luggage such that its orientation is to a greater extent "straight" on the conveyor belt and/or for instance more central on the conveyor belt as seen in transverse direction. Such vertical belts are costly and, due to the components moving just above the luggage carrying surface of conveyor belts, susceptible to malfunction.

US 5,456,332 A relates to a multiple-degree-of-freedom vehicle.

DE 10 2010 007 014 A1 relates to a vehicle.

The method according to the invention relates particularly to the application in a luggage processing system in which a number of autonomously travelling vehicles, such as in an airport in the order of tens to more than a hundred, can travel in a transport area controlled by a central control unit which can provide a vehicle with commands to travel autonomously to a supply location, to there receive an item of luggage and subsequently transport it further, such as for instance to a discharge location where the item of luggage can be unloaded from the vehicle.

An object of the invention is to realize in efficient manner the above specified reorientation, or correction of the orientation, of objects such as in particular items of luggage or goods similar thereto such as parcels.

Said object is achieved with the method according to the present invention for transporting an object, in particular an item of luggage, with an automatically controllable vehicle in an object processing system, in particular in a luggage processing system, the object processing system comprising
- a transport area with an at least substantially flat ground surface,
- a number of automatically controllable vehicles which can each travel over the ground surface,
- a central control unit for controlling each of the number of vehicles such that an object can be transported with a vehicle from a supply location in the transport area to a further location at a distance therefrom in the transport area,
- a supply conveyor which debouches with a downstream outer end thereof at the supply location and which at the downstream outer end is clear of the ground surface such that a vehicle can travel through beneath it,
each of the number of vehicles comprising:
- a chassis having on an upper side a carrying surface for the object,
- wheels which are controllable, such as for instance by pivoting, such that the vehicle is configured to be able to travel in crabbing motion,
- drive means for rotatable driving of at least one wheel of the wheels of the vehicle,
- a control unit for controlling the wheels at least for the purpose of the crabbing motion of the vehicle, which control unit is connected wirelessly to the central control unit during operation,
the method comprising the steps of
a) determining with sensing means connected to the central control unit the orientation of an object transported by the supply conveyor to the downstream outer end thereof,
b) controlling one of the number of vehicles with the central control unit so that it travels to the supply location to a position beneath said outer end of the supply conveyor and so that it travels out from under the downstream outer end in crabbing motion making use of its control unit such that the orientation of the carrying surface of the vehicle is adapted to the orientation of the object,
c) controlling the supply conveyor while the vehicle travels out from under the downstream outer end such that the object passes from the supply conveyor onto the carrying surface of the vehicle.

An advantage of the method according to the present invention is that, by having the vehicle travel in automated manner in crabbing motion mode during receiving of an object from a supply conveyor, this object is immediately brought into straight orientation on the vehicle. That is, correction of the orientation on the supply conveyor as described above with for instance vertical belts is no longer necessary, this resulting in a great cost-saving, increased reliability and simplification of the object processing system.

In the context of the invention an automatically controllable vehicle is understood to mean a vehicle which, at a command from a central control unit which is not provided on the vehicle but for instance in or close to a space in which the vehicle travels over a ground surface, can travel independently over a ground surface and can for instance cover a path imposed by the central control unit while using a local control unit on the vehicle and a drive such as by electric drive motors which are connected to at least one wheel.

Crabbing motion is understood to mean a mode of movement of a vehicle in which the direction of movement of the vehicle encloses an angle to the longitudinal direction thereof. For this purpose wheels of the vehicle can for instance be adjusted/pivoted to the same angle relative to the chassis or a longitudinal direction of the vehicle. In an above stated vehicle with a carrying surface for an object mounted on the chassis the orientation of the carrying surface during crabbing motion is hereby also at an angle relative to the direction of movement, or direction of travel, of the vehicle.

Although the invention relates particularly to the transport of objects such as items of luggage or similar goods such as parcels placed directly onto the carrying surface of the vehicle, also included within the context of the invention is transport with the vehicle of objects such as items of luggage received in a carrying tray such as a luggage tub, wherein a carrying tray with an object therein is thus placed on the carrying surface of the vehicle for the purpose of transport of the object by the vehicle.

Each of the number of vehicles preferably comprises
- a first wheel support arm connected to the chassis for pivoting about a first pivot axis and having respectively a left and right first wheel at the opposite outer ends thereof,
- a second wheel support arm connected to the chassis for pivoting about a second pivot axis located at a distance from the first pivot axis and having respectively a left and right second wheel at the opposite outer ends thereof,
- per wheel an electric drive motor connected thereto for driving the relevant wheel,
   wherein the control unit is configured for separate control of each of the drive motors,
- a source of electrical energy such as a battery which is connected to each of the drive motors and to the control unit.

Using such vehicles objects can be transported and also be moved in crabbing motion in extremely effective manner.

The first and second pivot axes extend mutually parallel and vertically, i.e. at least substantially perpendicularly of a plane defined by the wheel axles of the wheel, or at least substantially perpendicularly of a virtual plane through contact points of said wheels with a ground surface during operation of the vehicle. The second pivot axis is further located behind the first pivot axis as seen in longitudinal direction of the vehicle.

The method preferably comprises, for the purpose of step b), of
- controlling the drive motors with the control unit such that the first and second wheel support arms lie mutually parallel and at an angle to the chassis, which angle is determined subject to the orientation of the object such that the orientation of the carrying surface of the vehicle is adapted to the orientation of the object,
and for the purpose of step c), of
- controlling the vehicle such that it moves out from under the supply conveyor in line with the direction of transport of the supply conveyor, at least at the position of the downstream outer end.

It is favourable for the sensing means for the purpose of performing step a) to be configured to determine a rotation angle of the object relative to the direction of transport, at least at the location where the sensing means determine the orientation of the object, about a rotation axis directed perpendicularly of a transport surface of the supply conveyor. When the vehicle moves out parallel to the direction of transport from under the downstream outer end of the supply conveyor, this rotation angle of the object is therefore a direct indicator of the angle to be made with the vehicle between a longitudinal direction of the object carrying surface and the direction of movement of the vehicle.

It is moreover favourable, particularly in combination with the above stated determination of the rotation angle of the object, for the sensing means to be configured, for the purpose of step a), to determine a transverse position of the object on the supply conveyor, and wherein for the purpose of step c) the vehicle is controlled under the influence of the central control unit and the control unit of the vehicle such that the vehicle moves out from under the outer end of the supply conveyor such that the object comes to lie at least roughly centrally on the carrying surface of the vehicle. This achieves that, even if an object lies for instance wholly shifted toward a side on the supply conveyor, it nevertheless comes to lie largely in the centre on the carrying surface as seen in transverse direction of the carrying surface.

It is further favourable, for the purpose of having the object pass in largely gradual manner from the supply conveyor onto the vehicle, for the supply conveyor and the vehicle to be controlled under the influence of the central control unit such that the conveying speed of the supply conveyor is at least substantially equal to the vehicle speed of the vehicle, at least at the moment that the vehicle moves out from under the outer end of the supply conveyor.

For the purpose of having the object pass from the supply conveyor onto the vehicle the supply conveyor and the vehicle are controlled in an embodiment under the influence of the central control unit such that
- a front outer end of the object which first comes into contact with the carrying surface of the vehicle comes to lie at a longitudinal position of the carrying surface between a front outer end thereof and the centre thereof, and
- while at least a rear outer end of the object is still in contact with the supply conveyor the transport speed of the supply conveyor is set higher than the speed of the vehicle such that said front outer end of the object is pushed over the carrying surface in the direction of the front outer end of the carrying surface.

An advantage which is hereby gained is that relatively long objects, as seen relative to the length in longitudinal direction of the carrying surface, can be transferred in operationally reliable manner from the supply conveyor onto the carrying surface. Because a front outer end of the object lands in the described manner some distance behind the front outer end of the carrying surface, after which it is pushed forward, the chance of the front outer end landing outside the carrying surface, for instance on a bounding edge provided on the front outer end of the carrying surface, is significantly reduced, wherein the length available on the carrying surface can largely utilized by subsequently sliding the object forward again on the carrying surface.

The invention also relates to a vehicle as defined in claim 8 and to and object processing system as defined in claim 9. Advantages of the vehicle and of the object processing system according to the invention correspond to the advantages of the above specified method according to the invention.

The present invention will be elucidated hereinbelow on the basis of the description of a preferred embodiment of a vehicle and method according to the invention, in which:
Figure 1 is a three-dimensional view of a preferred embodiment of a vehicle according to the present invention,
Figure 2 is an exploded view of the vehicle according to figure 1,
Figure 3 is a three-dimensional view of a travelling part of the vehicle according to figure 1,
Figure 4 is a bottom view of the vehicle according to figure 1,
Figure 5 is a bottom view of a portion of the vehicle according to figure 1 in another operative position compared to figure 4,
Figure 6 is a bottom view of a portion of the vehicle according to figure 1, and
Figure 7 is a top view of a portion of the vehicle according to figure 1 in combination with a portion of a supply conveyor.

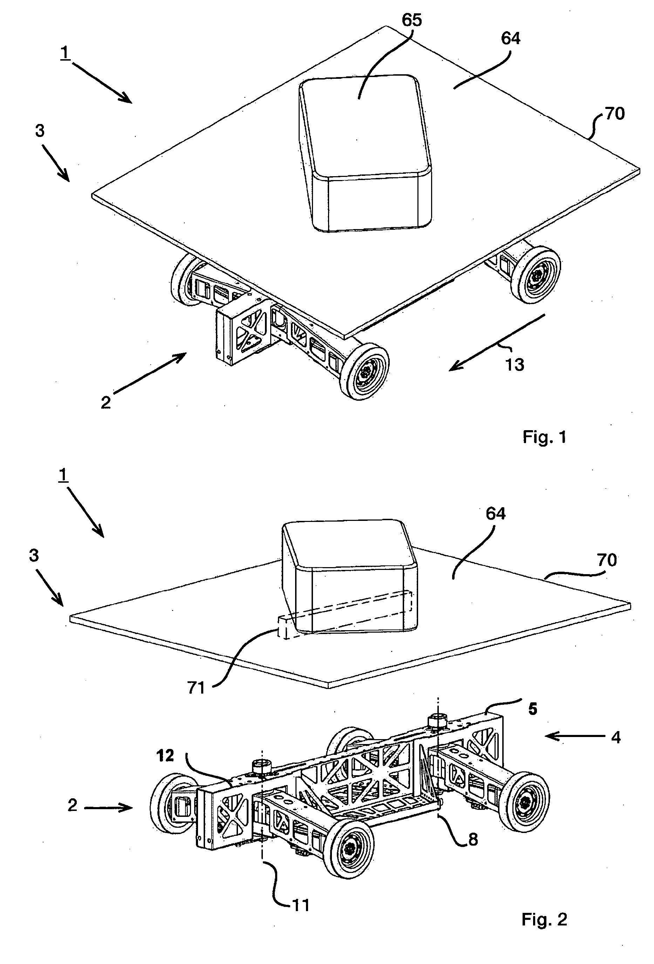

Figure 1 shows a vehicle 1 with a travelling part 2 and an object carrying part arranged on the travelling part 2 and formed by the luggage carrying part 3. The luggage carrying part 3 has a carrying surface 64 formed by an upper surface of a rectangular plate 70 for carrying one or more objects such as items of luggage 65 for the purpose of transporting the item/items of luggage 65 between a first and a second location.

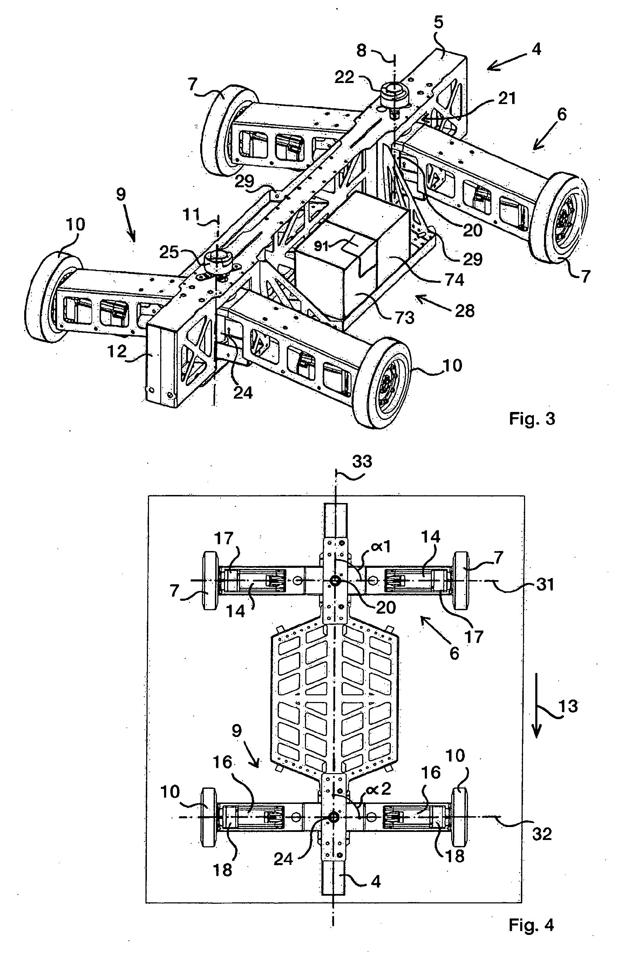

The travelling part 2 comprises an elongate chassis beam 4 which extends in longitudinal direction 13 of the vehicle 1 and lies centrally as seen in transverse direction of the vehicle 1, and which substantially forms the chassis. See figures 2 and 3. Provided close to a first outer end 5 of the chassis beam 4 is a first wheel support arm 6 which, at least in a neutral position of the wheel support arm 6, extends transversely of the chassis beam 4 and through the chassis beam 4. A respective first wheel 7 rotatable around a wheel axle is provided at both opposite outer ends of the first wheel support arm 6. The first wheel support arm 6 is connected centrally between the two wheels 7 to the chassis beam 4 for pivoting about a first pivot axis 8. The first pivot axis 8 extends vertically. The first pivot axis 8 further intersects the wheel axles of both first wheels 7, which wheel axles are mutually coaxial. Provided close to a second outer end 12 of the chassis beam 4 opposite the first outer end 5 is a second wheel support arm 9 which, at least in a neutral position of the wheel support arm 9, extends transversely of the chassis beam 4 and through the chassis beam 4 similarly to the first wheel support arm 6. A respective second wheel 10 rotatable around a wheel axle is provided at both opposite outer ends of the second wheel support arm 9. The second wheel support arm 9 is connected centrally between the two wheels 10 to the chassis beam 4 for pivoting about a second pivot axis 11. The second pivot axis 11 likewise extends vertically, or parallel to the first pivot axis 8. The second pivot axis 11 further intersects the wheel axles of both second wheels 10, which wheel axles are mutually coaxial. As shown particularly in figure 3 and figure 4, the described construction of the travelling part 2 of the vehicle 1 is substantially symmetrical as seen in both longitudinal direction 13 and transverse direction of the vehicle 1.

As shown particularly in figure 4, each of the wheels 7 has its own electric motor 14 which is connected thereto via a reducing gear and which is mounted on the first wheel support arm 6, and each of the wheels 10 similarly has its own electric motor 16 which is connected thereto via a reducing gear and which is mounted on the second wheel support arm 9. A respective first rotation sensor 17 is moreover connected to each of the wheels 7 for measuring rotation of the associated wheel round the wheel axle. A respective second rotation sensor 18 is connected to each of the wheels 10 for measuring rotation of the associated wheel round the wheel axle. Said rotation sensors 17, 18 are incremental encoders.

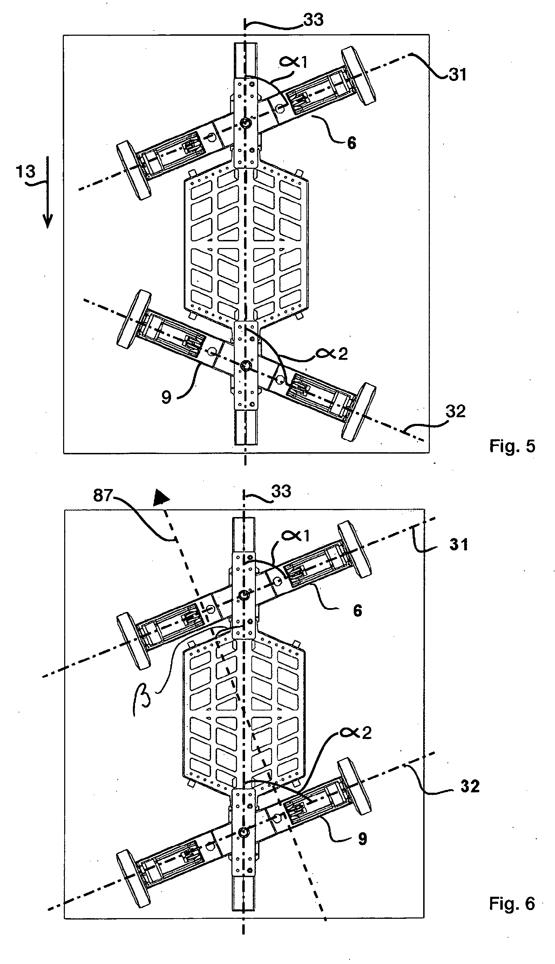

The first pivot axis 8 forms the central axis of a first shaft body 20 arranged in the first wheel support arm 6. The shaft body 20 is connected via bearings to the chassis beam 4 in a passage 21 in the chassis beam 4. In order to measure rotation of the first wheel support arm 6 round the first pivot axis 8 relative to the chassis beam 4, i.e. the angular position of the first wheel support arm 6, a first rotation sensor 22 is arranged which is connected on the one hand to the first shaft body 20 and on the other to the chassis beam 4. The first rotation sensor 20 is an absolute encoder. Said angular position is more specifically an angle α1 between the longitudinal axis 31 of the first wheel support arm 6, which longitudinal axis 31 runs coaxially to the wheel axles, and the longitudinal axis 33 of the chassis beam 4. See also figure 5. The longitudinal axis 33 of the centrally located chassis beam 4 is defined as a line lying perpendicularly of the first and second pivot axes 8, 11 and intersecting both these pivot axes 8, 11. The longitudinal axis 33 is parallel to the lengthwise direction 13 of the vehicle and the same as a lengthwise direction of the luggage carrying part in the form of the plate 70. The second wheel support arm 9 has the same construction, i.e. has a second shaft body 24 which is coaxial to the first pivot axis 11. A second rotation sensor 25 is operative between the chassis beam 4 and the second wheel support arm 9 for the purpose of measuring the angular position α2 of the second wheel support arm 9 relative to the chassis beam 4, i.e. an angle α2 between the longitudinal axis 32 of the second wheel support arm 9 and the longitudinal axis 33 of the chassis beam.

Both the first wheel support arm 6 and the second wheel support arm 9 can pivot freely around respectively the first and second pivot axis 8, 11, i.e. apart from the bearing there are further no elements generating a resetting force to the neutral position of the associated wheel support arm 6, 9. In the context of the invention the neutral position is understood to mean the position of the wheel support arms in which the vehicle 1 moves straight ahead, in line with the longitudinal direction 13 thereof. That is, the wheel support arms 6, 9 extend at right angles to the chassis beam 4. Because said pivot axes 8, 11 extend vertically, no resetting effect is brought about due to the orientation thereof. In order to prevent an undesirably large angular position α1, α2 of a wheel support arm 6, 9 end stops 29 are arranged on a central widened portion 28 of the vehicle 1.

The central portion 28 further functions for the purpose of carrying equipment such as a control unit 73 which is connected to the motors 14, 16 and all the above stated rotation sensors 17, 18, 22, 25. Also placed on the central portion 28 is a source of electrical energy in the form of a battery 74, which battery is at least connected to each of the drive motors 14, 16 and to the control unit 73. The vehicle 1 also comprises for each drive motor 14, 16 a separate frequency controller, not shown in the figures, for converting a control signal from the control unit 73 to a current and voltage for the drive motor 14, 16 connected to the associated frequency controller.

As shown particularly in figure 2, the plate 70 is mounted via a coupling piece 71 on the chassis beam. The coupling piece 71 is beam-like and extends through a vertical height such that a tower surface of the plate 70 is situated a little above the sensors 22, 25. The coupling piece 71 is attached with a screw fastening to the underside of the plate 70 and connected with a screw fastening to the top of a middle part of the chassis beam between the two shaft bodies 20 and 24.

The control unit 73 has a processor and memory element. Using the processor the operations or steps to be specified below can be performed by means of a control algorithm for performing said steps which is stored in the memory element. The control unit 73 can further comprise transmission means, such as in the form of a schematically shown transmitting and receiving module 91 for wireless communication 92 with a schematically shown transmitting and receiving module 94 of a schematically shown central control unit 93 of a transport system for objects such as items of luggage or similar goods such as parcels comprising a number of the above described vehicles, usually several tens to several hundreds, which can each communicate wirelessly with the central control unit. At a command from the central control unit the vehicle can be controlled here such that it travels for instance independently along a predetermined route from a first location to a second for the purpose of transporting one (or more) object(s) such as item(s) of luggage between said locations.

For the purpose of moving the vehicle the control unit is configured to control each of the drive motors equally by using the algorithm subject to a predetermined vehicle speed such that an at least substantially equal basic drive torque is applied to all wheels associated with the respective drive motors. The predetermined vehicle speed can for instance be a speed profile of the vehicle speed along a route to be covered by the vehicle. The speed profile can be stored or loaded in the memory of the control unit, preferably in dynamically modifiable manner, for instance resulting from mutual communication or data exchange between the control unit of the vehicle and the central control unit of a transport system of which the vehicle forms part.

For the purpose of said movement of the vehicle the control unit is further configured to determine, making use of the algorithm, an actual speed of a wheel support arm at the position of the pivot axis of this wheel support arm, wherein the speed is defined as a direction relative to the longitudinal direction of the associated wheel support arm and as a magnitude of the speed. This speed is determined by converting output signals coming from the two wheel rotation sensors associated with the wheels associated with this wheel support arm to a respective wheel speed and by determining an average hereof. Because the pivot axis of each of the wheel support arms lies centrally between the associated respective wheels and the wheel support arm is also connected to the chassis at this location, the calculated actual speed of the wheel support arm is therefore also the speed of the vehicle at the position of the associated pivot axis.

In an embodiment of the method an actual vehicle speed can then be determined by determining a quadratic average, or effective value, of the actual speed of the first and the second wheel support arm. The actual wheel speed is alternatively determined by the actual speed of one of the first and the second wheel support arm.

The determined actual vehicle speed is subsequently compared to the predetermined vehicle speed in order to determine a speed deviation, and the basic drive torque of each of the wheels of the vehicle is changed in equal measure subject to the speed deviation.

The control unit is further configured, for the purpose of changing an angular position of the wheel support arm relative to the chassis for changing the direction of the vehicle, to control the drive motors associated with this wheel support arm such that an additional steering torque, which is of the same magnitude but of opposite direction, is applied to the wheels associated with the respective drive motors. The overall torque acting on a wheel is therefore the sum of the basic drive torque and the steering torque. A predetermined angular position, or an angular position profile of the angular position along the route, of a wheel support arm can be determined on the basis of information about the route to be covered. Such a profile can be stored or loaded in the memory of the control unit, preferably in dynamically modifiable manner, for instance as a result of mutual communication between the control unit of the vehicle and the central control unit.

In an embodiment of the method the control unit comprises a location determining algorithm for determining the location of the vehicle on the ground surface over which the vehicle moves, or the location of the vehicle in the space in which it is situated. Information about the space can be stored or loaded for this purpose in the memory of the control unit, for instance in the form of a map with information about for instance delimitations of the space such as walls, obstacles in the space such as pillars, and optionally about orientation elements arranged fixedly in the space, such as for instance magnets in the ground. A vehicle position can be determined by the control unit on the basis of signals from wheel rotation sensors and optionally also from wheel support arm rotation sensors. The vehicle position can be compared to a predetermined vehicle position which follows from the route to be covered by the vehicle, which route can be stored linked to the map in the memory. A deviation in the position of the vehicle, i.e. a difference between the determined vehicle position and the predetermined vehicle position, for instance at the position of a pivot axis, can then be converted to a change in the predetermined angular position of the wheel support arm about this pivot axis such that the position deviation is reduced.

The control unit can be configured, periodically or depending on the location of the vehicle, to compare the determined vehicle position to actual vehicle position information, obtained from for instance the detection of an orientation element such as a magnet by a detection element, for periodic correction of the determined vehicle position on the basis of the actual position of the vehicle in the space. In this respect the detection element can alternatively be configured to scan an area of the space, for instance on the basis of laser beams, for the purpose of determining the actual position of the vehicle in the space.

For the purpose of said change in the angular position of a wheel support arm the control unit is configured to determine an actual angular position of a wheel support arm on the basis of an output signal from the rotation sensor associated with this wheel support arm, and to compare the actual angular position to the predetermined angular position of the relevant wheel support arm so as to determine an angular position deviation and, depending on the angular position deviation, to change in equal measure but in opposing direction the additional steering torque applied to the wheels associated with the relevant wheel support arm.

In order to change the direction of the vehicle the control unit is further configured in an embodiment to determine, on the basis of a predetermined change to be made in the direction of the vehicle, a predetermined angular position of the first wheel support arm and of the second wheel support arm such that the respective angular positions are at least substantially the same but in opposed directions as seen relative to the neutral position in which both angular positions are 90 degrees.

As shown in figure 4 and described above, the first and second wheel support arms 6, 9 are provided mutually parallel and at right angles to the chassis beam 4 in the neutral position during travel straight ahead, though not during crabbing motion as will be further elucidated hereinbelow. That is, the angles α1 and α2 are both 90 degrees in the neutral position of the wheel support arms 6, 9. In figure 5 the position of the wheel support arms 6, 9 is shown when negotiating a bend. In this situation the wheels associated with each wheel support arm 6, 9 are driven such that the angular positions α1, α2 of the respective wheel support arms 6, 9 relative to the chassis are of the same magnitude but of opposite direction relative to the right-angled neutral position. In the example shown in figure 5 α1 is about 90 - 20 = 70 degrees, while α2 is about 90 + 20 = 110 degrees.

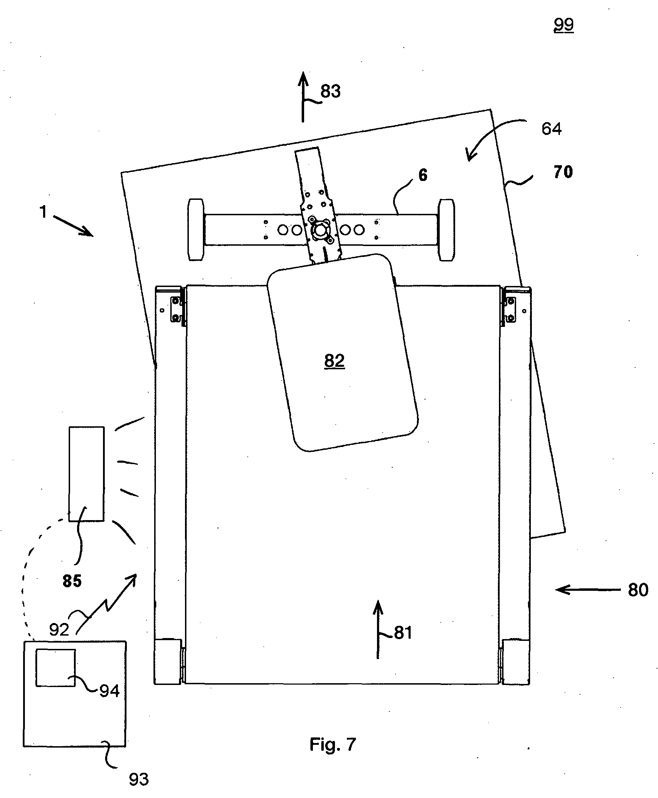

Figure 6 shows a bottom view of the so-called crabbing motion mode of the vehicle 1. The above described plate 70 is not shown in either figure 6 or in figure 7. In this crabbing motion mode the wheels are controlled with the control unit such that the wheel support arms 6, 9 extend mutually parallel and at the same angle α1 = α2 relative to the chassis beam 4. The direction of movement of the vehicle 1 indicated by arrow 87 is thus at an angle β relative to the orientation of the lengthwise direction 13 of the chassis of the vehicle 1, or of the longitudinal axis 33 of the chassis beam 4, and thereby also of the longitudinal axis of the product carrying part 3 in the form of the plate 70 which is mounted thereon.

This crabbing motion mode is particularly favourable when an object such as an item of luggage 82 is loaded onto the vehicle 1 from a supply conveyor 80 as shown in figure 7. The vehicle and in any case at least the downstream outer end of the supply conveyor are located in a transport area 99 in which at least a further number of such vehicles are also located and, in an embodiment, also the central control unit of the transport system. The supply conveyor 80 has a transport direction indicated with arrow 81 and, at least in the situation shown in figure 7, an item of luggage 82 is conversely moved off the conveyor 80 onto the carrying surface 64 of the plate 70 of the vehicle 1. The plate 70 is shown transparently for the sake of clarity in figure 7.

As shown in figure 7, the item of luggage 82 lies obliquely on the supply conveyor 80, i.e. in the shown top view the item of luggage 82 has rotated through an angle around a vertical axis such that the peripheral sides of the item of luggage 82 do not lie at least substantially parallel or at right angles to the direction of transport 81 of the supply conveyor 80. This occurs frequently in practice. It would be undesirable for the item of luggage 82 to land in this askew orientation on the carrying surface 64 of the vehicle 1. Provision is made for this purpose according to the invention that the orientation of an item of luggage 82 transported by the supply conveyor 80 to the outer end thereof is determined by making use of schematically shown sensing means 85, such as a camera, connected to the central control unit 93. One of the number of vehicles, in the present embodiment the shown vehicle 1, is then driven to the downstream outer end of the supply conveyor 80 such that it travels to a position beneath the supply conveyor 80. It is noted in this respect that at least the portion comprising the downstream outer end of the supply conveyor 80 is at a height above the ground surface such that a vehicle 1 can move freely through beneath the supply conveyor 80. The vehicle 1 is controlled such that it moves out from under the supply conveyor 80 with its direction of movement 83 parallel to the direction of transport 81 of the supply conveyor 80. As shown, the vehicle 1 is in the above described crabbing motion mode wherein the angle between the wheel support arms 6, 9 and the chassis beam 4, making use of the control unit of the vehicle and the central control unit 93 and the wireless communication 92 therebetween, is adapted to the orientation of the item of luggage on the supply conveyor 80 such that, as shown clearly in figure 7, peripheral sides of the item of luggage 82 are at least substantially parallel to corresponding peripheral sides of the carrying surface 64 of the vehicle 1. In an embodiment the control unit and also the control of the supply conveyor 80 are adapted to each other such that, at the moment the vehicle 1 moves out from under the free outer end of the supply conveyor 80, the conveyor belt speed of the supply conveyor 80 is roughly equal to the speed of movement of the vehicle 1. The item of luggage 82 will now move off the supply conveyor 80 and land on the luggage carrying surface 64 of the vehicle 1. When the wheels of the vehicle 1 are now controlled with the control unit such that the crabbing motion mode is terminated and the vehicle 1 thus returns to the "normal" movement mode as shown in figure 4, the item of luggage will lie largely straight, i.e. in the correct orientation with the peripheral sides roughly parallel to the peripheral sides of the vehicle 1 on the carrying surface of the vehicle 1, without physical corrective contact with the item of luggage 82 having been necessary here on the supply conveyor 80 or on the vehicle 1.

## Claims

1. A method for transporting an object such as an item of luggage (65, 82) or goods similar thereto such as a parcel with an automatically controllable vehicle (1) in an object processing system, such as a processing system for items of luggage (65, 82) or goods similar thereto such as parcels,
the object processing system comprising
- a transport area (99) with an at least substantially flat ground surface,
- a number of automatically controllable vehicles (1) which can each travel over the ground surface,
- a central control unit (93) for controlling each of the number of vehicles (1) such that an object can be transported with a vehicle (1) from a supply location in the transport area (99) to a further location at a distance therefrom in the transport area,
- a supply conveyor (80) which debouches with a downstream outer end thereof at the supply location and which at the downstream outer end is clear of the ground surface such that a vehicle (1) can travel through beneath it,
each of the number of vehicles (1) comprising:
- a chassis (4) having on an upper side a carrying surface (64) for the object,
- wheels (7, 10) which are controllable such that the vehicle (1) is configured to be able to travel in crabbing motion,
- drive means (14, 16) for rotatable driving of at least one wheel (7, 10) of the wheels of the vehicle (1),
- a control unit (73) for controlling the wheels (7, 10) at least for the purpose of the crabbing motion of the vehicle (1), which control unit (73) is connected wirelessly to the central control unit (93) during operation,
the method comprising the steps of
a) determining with sensing means (85) connected to the central control unit (93) the orientation of an object transported by the supply conveyor (80) to the downstream outer end thereof,
b) controlling one of the number of vehicles (1) with the central control unit (93) so that it travels to the supply location to a position beneath said outer end of the supply conveyor (80) and so that it travels out from under the downstream outer end in crabbing motion making use of its control unit (73) such that the orientation of the carrying surface (64) of the vehicle (1) is adapted to the orientation of the object,
c) controlling the supply conveyor (80) while the vehicle (1) travels out from under the downstream outer end such that the object passes from the supply conveyor (80) onto the carrying surface (64) of the vehicle (1).

2. A method according to claim 1, each of the number of vehicles (1) comprising:
- a first wheel support arm (6) connected to the chassis (4) for pivoting about a first pivot axis (8) and having respectively a left and right first wheel (7) at the opposite outer ends thereof,
- a second wheel support arm (9) connected to the chassis (4) for pivoting about a second pivot axis (11) located at a distance from the first pivot axis (8) and having respectively a left and right second wheel (10) at the opposite outer ends thereof,
- per wheel (7, 10) an electric drive motor (14, 16) connected thereto for driving the relevant wheel (7, 10),
wherein the control unit (73) is configured for separate control of each of the drive motors (14, 16),
- a source of electrical energy such as a battery (74) which is connected to each of the drive motors (14, 16) and to the control unit (73).

3. A method according to claim 2, comprising, for the purpose of step b), of
- controlling the drive motors (14, 16) with the control unit (73) such that the first and second wheel support arms (6, 9) lie mutually parallel and at an angle (α1, α2) to the chassis (4), which angle (α1, α2) is determined subject to the orientation of the object such that the orientation of the carrying surface (64) of the vehicle (1) is adapted to the orientation of the object,
and for the purpose of step c), of
- controlling the vehicle (1) such that it moves out from under the supply conveyor (80) in line with the direction of transport (81) of the supply conveyor (80), at least at the position of the downstream outer end.

4. A method according to claim 1, 2 or 3, wherein the sensing means (85) for the purpose of performing step a) are configured to determine a rotation angle of the object relative to the direction of transport (81), at least at the location where the sensing means (85) determine the orientation of the object, about a rotation axis directed perpendicularly of a transport surface of the supply conveyor (80).

5. A method according to any one of the preceding claims, wherein the sensing means (85) are configured, for the purpose of step a), to determine a transverse position of the object on the supply conveyor (80), and wherein for the purpose of step c) the vehicle (1) is controlled under the influence of the central control unit (93) and the control unit (73) of the vehicle (1) such that the vehicle (1) moves out from under the outer end of the supply conveyor (80) such that the object comes to lie at least roughly centrally on the carrying surface (64) of the vehicle (1).

6. A method according to any one of the preceding claims, wherein for the purpose of having the object pass from the supply conveyor (80) onto the vehicle (1) the supply conveyor (80) and the vehicle (1) are controlled under the influence of the central control unit (93) such that the conveying speed of the supply conveyor (80) is at least substantially equal to the vehicle speed of the vehicle (1), at least at the moment that the vehicle (1) moves out from under the outer end of the supply conveyor (80).

7. A method according to any one of the preceding claims, wherein for the purpose of having the object pass from the supply conveyor (80) onto the vehicle (1) the supply conveyor (80) and the vehicle (1) are controlled under the influence of the central control unit (93) such that
- a front outer end of the object which first comes into contact with the carrying surface (64) of the vehicle (1) comes to lie at a longitudinal position of the carrying surface (64) between a front outer end thereof and the centre thereof,
and
- while at least a rear outer end of the object is still in contact with the supply conveyor (80) the transport speed of the supply conveyor (80) is set higher than the speed of the vehicle (1) such that said front outer end of the object is pushed over the carrying surface (64) in the direction of the front outer end of the carrying surface (64).

8. An automatically controllable vehicle (1) for transporting an object such as an item of luggage (65, 82) or goods similar thereto such as a parcel in an object processing system such as a luggage processing system, comprising:
- a chassis (4) having on an upper side a carrying surface (64) for the object,
- a first wheel support arm (6) connected to the chassis (4) for pivoting about a first pivot axis (8) and having respectively a left and right first wheel (7) at the opposite outer ends thereof,
- a second wheel support arm (9) connected to the chassis (4) for pivoting about a second pivot axis (11) located at a distance from the first pivot axis (8) and having respectively a left and right second wheel (10) at the opposite outer ends thereof,
- per wheel (7, 10) an electric drive motor (14, 16) connected thereto for driving the relevant wheel (7, 10),
- a control unit (73) for separate control of each of the drive motors (14, 16), which control unit is connected wirelessly to a central control unit (93) of the object processing system during operation, wherein the control unit of the vehicle is configured such that the method according to any one of the preceding claims is performed with the vehicle during operation.

9. An object processing system, in particular for processing objects such as items of luggage (65, 82) or goods similar thereto such as parcels, comprising
- a transport area (99) with an at least substantially flat ground surface,
- a number of automatically controllable vehicles (1) according to claim 8 which can each travel over the ground surface,
- a central control unit (93) for controlling each of the number of vehicles (1) such that an object can be transported with a vehicle (1) from a supply location in the transport area (99) to a further location at a distance therefrom in the transport area (99),
- a supply conveyor (80) which debouches with a downstream outer end thereof at the supply location and which at the downstream outer end is clear of the ground surface such that a vehicle (1) can travel through beneath it,
wherein the object processing system is configured to perform the method according to any one of the claims 1- 7.

## Patentansprüche

1. Verfahren zum Transportieren eines Objekts, wie etwa eines Gepäckstücks (65, 82) oder dem ähnlicher Güter, wie etwa eines Pakets, mit einem automatisch steuerbaren Fahrzeug (1) in einem Objektverarbeitungssystem, wie etwa einem Verarbeitungssystem für Gepäckstücke (65, 82) oder diesen ähnliche Güter wie etwa Pakete, wobei das Objektverarbeitungssystem Folgendes umfasst:
- einen Transportbereich (99) mit einer wenigstens im Wesentlichen ebenen Bodenoberfläche,
- mehrere automatisch steuerbare Fahrzeuge (1), die sich jeweils über die Bodenoberfläche bewegen können,
- eine zentrale Steuereinheit (93), um jedes der mehreren Fahrzeuge (1) so zu steuern, dass ein Objekt mit einem Fahrzeug (1) von einer Zuführungsstelle im Transportbereich (99) zu einer weiteren, davon entfernten Stelle im Transportbereich transportiert werden kann,
- einen Zuführförderer (80), der mit einem auslaufseitigen äußeren Ende an der Zuführungsstelle mündet und am auslaufseitigen äußeren Ende zur Bodenoberfläche einen Abstand aufweist, sodass ein Fahrzeug (1) sich darunter hindurch bewegen kann, wobei jedes der mehreren Fahrzeuge (1) Folgendes umfasst:
- einen Rahmen (4), der auf einer Oberseite eine Tragefläche (64) für das Objekt hat,
- Räder (7, 10), die so steuerbar sind, dass das Fahrzeug (1) dazu eingerichtet ist, sich in Querbewegung bewegen zu können,
- Antriebsmittel (14, 16) zum Drehantrieb wenigstens eines Rades (7, 10) aus den Rädern des Fahrzeugs (1),
- eine Steuereinheit (73), um die Räder (7, 10) zumindest zum Zweck der Querbewegung des Fahrzeugs (1) zu steuern, wobei die Steuereinheit (73) während des Betriebs drahtlos mit der zentralen Steuereinheit (93) verbunden ist, wobei das Verfahren die folgenden Schritte umfasst:
a) Bestimmen der Ausrichtung eines Objekts, das vom Zuführförderer (80) zu dessen auslaufseitigem äußeren Ende transportiert wird, mit Sensormitteln (85), die mit der zentralen Steuereinheit (93) verbunden sind,
b) Steuern eines der mehreren Fahrzeuge (1) mit der zentralen Steuereinheit (93), sodass es sich zur Zuführungsstelle, zu einer Position unterhalb des äußeren Endes des Zuführförderers (80) bewegt und sodass es sich in Querbewegung unter dem auslaufseitigen äußeren Ende hervor bewegt, wobei es seine Steuereinheit (73) so nutzt, dass die Ausrichtung der Tragefläche (64) des Fahrzeugs (1) an die Ausrichtung des Objekts angepasst ist,
c) Steuern des Zuführförderers (80), während sich das Fahrzeug (1) unter dem auslaufseitigen äußeren Ende hervor bewegt, derart, dass das Objekt vom Zuführförderer (80) auf die Tragefläche (64) des Fahrzeugs (1) verlagert wird.

2. Verfahren nach Anspruch 1, wobei jedes der mehreren Fahrzeuge (1) Folgendes umfasst:
- einen ersten Radtragarm (6), der um eine erste Schwenkachse (8) schwenkbar mit dem Rahmen (4) verbunden ist und jeweils ein linkes und ein rechtes erstes Rad (7) an seinen entgegengesetzten äußeren Enden hat,
- einen zweiten Radtragarm (9), der um eine zweite Schwenkachse (11) schwenkbar mit dem Rahmen (4) verbunden ist, die sich in einem Abstand von der ersten Schwenkachse (8) befindet, und jeweils ein linkes und ein rechtes zweites Rad (10) an seinen entgegengesetzten äußeren Enden hat,
- je Rad (7, 10) einen elektrischen Antriebsmotor (14, 16), der mit diesem verbunden ist, um das entsprechende Rad (7, 10) anzutreiben,
wobei die Steuereinheit (73) zur getrennten Steuerung jedes der Antriebsmotoren (14, 16) eingerichtet ist,
- eine Quelle elektrischer Energie, wie etwa eine Batterie (74), die mit jedem der Antriebsmotoren (14, 16) und der Steuereinheit (73) verbunden ist.

3. Verfahren gemäß Anspruch 2, bei dem zum Zweck des Schritts b)
- die Antriebsmotoren (14, 16) mit der Steuereinheit (73) so gesteuert werden, dass der erste und der zweite Radtragarm (6, 9) zueinander parallel und in einem Winkel (α1, α2) zum Rahmen (4) liegen, wobei der Winkel (α1, α2) in Abhängigkeit von der Ausrichtung des Objekts bestimmt wird, sodass die Ausrichtung der Tragefläche (64) des Fahrzeugs (1) an die Ausrichtung des Objekts angepasst ist,
und bei dem zum Zweck des Schritts c)
- das Fahrzeug (1) so gesteuert wird, dass es sich unter dem Zuführförderer (80), zumindest in der Position am auslaufseitigen äußeren Ende, in Übereinstimmung mit der Transportrichtung (81) des Zuführförderers (80) hervor bewegt.

4. Verfahren gemäß Anspruch 1, 2 oder 3, wobei die Sensormittel (85) zum Zweck der Ausführung von Schritt a) dazu eingerichtet sind, zumindest an der Stelle, an der die Sensormittel (85) die Ausrichtung des Objekts bestimmen, einen Drehwinkel des Objekts relativ zur Transportrichtung (81) um eine Drehachse, die senkrecht zu einer Transportfläche des Zuführförderers (80) gerichtet ist, zu bestimmen.

5. Verfahren gemäß einem der vorhergehenden Ansprüche, wobei die Sensormittel (85) zum Zweck des Schritts a) dazu eingerichtet sind, eine Querposition des Objekts auf dem Zuführförderer (80) zu bestimmen, und wobei zum Zweck des Schritts c) das Fahrzeug (1) unter dem Einfluss der zentralen Steuereinheit (93) und der Steuereinheit (73) des Fahrzeugs (1) so gesteuert wird, dass das Fahrzeug (1) sich unter dem äußeren Ende des Zuführförderers (80) so hervor bewegt, dass das Objekt zumindest ungefähr in der Mitte der Tragefläche (64) des Fahrzeugs (1) zu liegen kommt.

6. Verfahren gemäß einem der vorhergehenden Ansprüche, wobei zu dem Zweck, dass das Objekt vom Zuführförderer (80) auf das Fahrzeug (1) verlagert wird, der Zuführförderer (80) und das Fahrzeug (1) unter dem Einfluss der zentralen Steuereinheit (93) so gesteuert werden, dass die Fördergeschwindigkeit des Zuführförderers (80) mindestens im Wesentlichen gleich der Fahrzeuggeschwindigkeit des Fahrzeugs (1) ist, zumindest in dem Moment, in dem sich das Fahrzeug (1) unter dem äußeren Ende des Zuführförderers (80) hervor bewegt.

7. Verfahren gemäß einem der vorhergehenden Ansprüche, wobei zu dem Zweck, dass das Objekt vom Zuführförderer (80) auf das Fahrzeug (1) verlagert wird, der Zuführförderer (80) und das Fahrzeug (1) unter dem Einfluss der zentralen Steuereinheit (93) so gesteuert werden, dass
- ein vorderes äußeres Ende des Objekts, das zuerst in Kontakt mit der Tragefläche (64) des Fahrzeugs (1) kommt, an einer longitudinalen Position der Tragefläche (64) zwischen deren vorderem äußeren Ende und deren Mitte zu liegen kommt, und
- während wenigstens ein hinteres äußeres Ende des Objekts noch in Kontakt mit dem Zuführförderer (80) ist, die Transportgeschwindigkeit des Zuführförderers (80) höher eingestellt wird als die Geschwindigkeit des Fahrzeugs (1), sodass das vordere äußere Ende des Objekts über die Tragefläche (64) in Richtung des vorderen äußeren Endes der Tragefläche (64) geschoben wird.

8. Automatisch steuerbares Fahrzeug (1) zum Transport eines Objekts, wie etwa eines Gepäckstücks (65, 82) oder dem ähnlicher Güter, wie etwa eines Pakets, in einem Objektverarbeitungssystem, wie etwa einem Verarbeitungssystem für Gepäck, das Folgendes umfasst:
- einen Rahmen (4), der auf einer Oberseite eine Tragefläche (64) für das Objekt hat,
- einen ersten Radtragarm (6), der um eine erste Schwenkachse (8) schwenkbar mit dem Rahmen (4) verbunden ist und jeweils ein linkes und ein rechtes erstes Rad (7) an seinen entgegengesetzten äußeren Enden hat,
- einen zweiten Radtragarm (9), der um eine zweite Schwenkachse (11) schwenkbar mit dem Rahmen (4) verbunden ist, die sich in einem Abstand von der ersten Schwenkachse (8) befindet, und jeweils ein linkes und ein rechtes zweites Rad (10) an seinen entgegengesetzten äußeren Enden hat,
- je Rad (7, 10) einen elektrischen Antriebsmotor (14, 16), der mit diesem verbunden ist, um das entsprechende Rad (7, 10) anzutreiben,
- eine Steuereinheit (73) zur getrennten Steuerung jedes der Antriebsmotoren (14, 16), die während des Betriebs drahtlos mit einer zentralen Steuereinheit (93) des Objektverarbeitungssystems verbunden ist, wobei die Steuereinheit des Fahrzeugs so eingerichtet ist, dass das Verfahren gemäß einem der vorhergehenden Ansprüche mit dem Fahrzeug während des Betriebs ausgeführt wird.

9. Objektverarbeitungssystem, insbesondere zur Verarbeitung von Objekten wie etwa Gepäckstücken (65, 82) oder diesen ähnlicher Güter wie etwa Pakete, das Folgendes umfasst:
- einen Transportbereich (99) mit einer wenigstens im Wesentlichen ebenen Bodenoberfläche,
- mehrere automatisch steuerbare Fahrzeuge (1) gemäß Anspruch 8, die sich jeweils über die Bodenoberfläche bewegen können,
- eine zentrale Steuereinheit (93), um jedes der mehreren Fahrzeuge (1) so zu steuern, dass ein Objekt mit einem Fahrzeug (1) von einer Zuführungsstelle im Transportbereich (99) zu einer weiteren, davon entfernten Stelle im Transportbereich (99) transportiert werden kann,
- einen Zuführförderer (80), der mit einem auslaufseitigen äußeren Ende an der Zuführungsstelle mündet und am auslaufseitigen äußeren Ende zur Bodenoberfläche einen Abstand aufweist, sodass sich ein Fahrzeug (1) darunter hindurch bewegen kann,
wobei das Objektverarbeitungssystem dazu eingerichtet ist, das Verfahren gemäß einem der Ansprüche 1 bis 7 auszuführen.

## Revendications

1. Procédé de transport d'un objet tel qu'un bagage (65, 82) ou des articles similaires tels qu'un colis avec un véhicule à commande automatique (1) dans un système de traitement d'objet, tel qu'un système de traitement de bagages (65, 82) ou d'articles similaires tels que des colis,
le système de traitement d'objet comprenant
- une zone de transport (99) avec une surface au sol au moins sensiblement plate,
- un nombre de véhicules à commande automatique (1) qui peuvent chacun circuler sur la surface au sol,
- une unité de commande centrale (93) pour commander chacun du nombre de véhicules (1) de sorte qu'un objet puisse être transporté avec un véhicule (1) depuis un emplacement d'alimentation dans la zone de transport (99) jusqu'à un autre emplacement à une distance de celui-ci dans la zone de transport,
- un convoyeur d'alimentation (80) qui débouche avec une extrémité extérieure en aval de celui-ci au niveau de l'emplacement d'alimentation et qui, au niveau de l'extrémité extérieure en aval, est dégagé de la surface du sol de sorte qu'un véhicule (1) puisse circuler en dessous, chacun du nombre de véhicules (1) comprenant :
- un châssis (4) ayant sur un côté supérieur une surface porteuse (64) pour l'objet,
- des roues (7, 10) qui peuvent être commandées de sorte que le véhicule (1) soit configuré pour pouvoir circuler en mouvement en crabe,
- des moyens d'entraînement (14, 16) pour entraîner en rotation au moins une roue (7, 10) parmi les roues du véhicule (1),
- une unité de commande (73) pour commander les roues (7, 10) au moins dans le but du mouvement en crabe du véhicule (1), laquelle unité de commande (73) est connectée sans fil à l'unité de commande centrale (93) pendant le fonctionnement,
le procédé comprenant les étapes de
a) détermination avec les moyens de détection (85) connectés à l'unité de commande centrale (93) de l'orientation d'un objet transporté par le convoyeur d'alimentation (80) jusqu'à son extrémité extérieure aval,
b) commande de l'un du nombre de véhicules (1) avec l'unité de commande centrale (93) de façon à ce qu'il circule jusqu'à l'emplacement d'alimentation jusqu'à une position en dessous de ladite extrémité extérieure du convoyeur d'alimentation (80) et de façon à ce qu'il sorte de dessous l'extrémité extérieure aval en mouvement en crabe en exploitant son unité de commande (73) de sorte que l'orientation de la surface porteuse (64) du véhicule (1) soit adaptée à l'orientation de l'objet,
c) commande du convoyeur d'alimentation (80) tandis que le véhicule (1) sort de dessous l'extrémité extérieure aval de sorte que l'objet passe du convoyeur d'alimentation (80) sur la surface porteuse (64) du véhicule (1).

2. Procédé selon la revendication 1, chacun du nombre de véhicules (1) comprenant :
- un premier bras de support de roue (6) raccordé au châssis (4) pour pivoter autour d'un premier axe de pivot (8) et ayant respectivement une première roue gauche et droite (7) à ses extrémités extérieures opposées,
- un second bras de support de roue (9) raccordé au châssis (4) pour pivoter autour d'un second axe de pivot (11) situé à une distance du premier axe de pivot (8) et ayant respectivement une seconde roue gauche et droite (10) à ses extrémités extérieures opposées,
- par roue (7, 10), un moteur d'entraînement électrique (14, 16) raccordé à celle-ci pour entraîner la roue (7, 10) concernée,
dans lequel l'unité de commande (73) est configurée pour une commande séparée de chacun des moteurs d'entraînement (14, 16),
- une source d'énergie électrique telle qu'une batterie (74) qui est raccordée à chacun des moteurs d'entraînement (14, 16) et à l'unité de commande (73).

3. Procédé selon la revendication 2, comprenant, pour le but de l'étape b),
- la commande des moteurs d'entraînement (14, 16) avec l'unité de commande (73) de sorte que les premier et second bras de support de roue (6, 9) se trouvent parallèles l'un à l'autre et en formant un angle (α1, α2) avec le châssis (4), lequel angle (α1, α2) est déterminé selon l'orientation de l'objet de sorte que l'orientation de la surface porteuse (64) du véhicule (1) soit adaptée à l'orientation de l'objet,
et dans le but de l'étape c),
- la commande du véhicule (1) de sorte qu'il sorte de dessous le convoyeur d'alimentation (80) en ligne avec la direction de transport (81) du convoyeur d'alimentation (80), au moins à la position de l'extrémité extérieure aval.

4. Procédé selon la revendication 1, 2 ou 3, dans lequel les moyens de détection (85) dans le but de réaliser l'étape a) sont configurés pour déterminer un angle de rotation de l'objet par rapport à la direction de transport (81), au moins à l'emplacement où les moyens de détection (85) déterminent l'orientation de l'objet, autour d'un axe de rotation orienté perpendiculairement à une surface de transport du convoyeur d'alimentation (80).

5. Procédé selon l'une quelconque des revendications précédentes, dans lequel les moyens de détection (85) sont configurés, dans le but de l'étape a), pour déterminer une position transversale de l'objet sur le convoyeur d'alimentation (80), et dans lequel pour le but de l'étape c), le véhicule (1) est commandé sous l'influence de l'unité de commande centrale (93) et de l'unité de commande (73) du véhicule (1) de sorte que le véhicule (1) sorte de dessous l'extrémité extérieure du convoyeur d'alimentation (80) de sorte que l'objet vienne se trouver au moins approximativement au centre sur la surface porteuse (64) du véhicule (1).

6. Procédé selon l'une quelconque des revendications précédentes, dans lequel dans le but de faire passer l'objet du convoyeur d'alimentation (80) sur le véhicule (1), le convoyeur d'alimentation (80) et le véhicule (1) sont commandés sous l'influence de l'unité de commande centrale (93) de sorte que la vitesse de convoyage du convoyeur d'alimentation (80) soit au moins sensiblement égale à la vitesse du véhicule (1), au moins au moment où le véhicule (1) sort de dessous l'extrémité extérieure du convoyeur d'alimentation (80).

7. Procédé selon l'une quelconque des revendications précédentes, dans lequel dans le but de faire passer l'objet du convoyeur d'alimentation (80) sur le véhicule (1), le convoyeur d'alimentation (80) et le véhicule (1) sont commandés sous l'influence de l'unité de commande centrale (93) de sorte que
- une extrémité extérieure avant de l'objet qui vient d'abord en contact avec la surface porteuse (64) du véhicule (1) vienne se trouver à une position longitudinale de la surface porteuse (64) entre une extrémité extérieure avant de celle-ci et le centre de celle-ci,
et
- tandis qu'au moins une extrémité extérieure arrière de l'objet est toujours en contact avec le convoyeur d'alimentation (80), la vitesse de transport du convoyeur d'alimentation (80) soit réglée pour être plus élevée que la vitesse du véhicule (1) de sorte que ladite extrémité extérieure avant de l'objet soit poussée sur la surface porteuse (64) dans la direction de l'extrémité extérieure avant de la surface porteuse (64).

8. Véhicule à commande automatique (1) pour transporter un objet tel qu'un bagage (65, 82) ou des articles similaires tels qu'un colis dans un système de traitement d'objet tel qu'un système de traitement de bagage, comprenant :
- un châssis (4) ayant sur un côté supérieur une surface porteuse (64) pour l'objet,
- un premier bras de support de roue (6) raccordé au châssis (4) pour pivoter autour d'un premier axe de pivot (8) et ayant respectivement une première roue gauche et droite (7) à ses extrémités extérieures opposées,
- un second bras de support de roue (9) raccordé au châssis (4) pour pivoter autour d'un second axe de pivot (11) situé à une distance du premier axe de pivot (8) et ayant respectivement une seconde roue gauche et droite (10) à ses extrémités extérieures opposées,
- par roue (7, 10), un moteur d'entraînement électrique (14, 16) raccordé à celle-ci pour entraîner la roue (7, 10) concernée,
- une unité de commande (73) pour une commande séparée de chacun des moteurs d'entraînement (14, 16), laquelle unité de commande est connectée sans fil à l'unité de commande centrale (93) du système de traitement d'objet pendant le fonctionnement, dans lequel l'unité de commande du véhicule est configurée de sorte que le procédé selon l'une quelconque des revendications précédentes soit réalisé avec le véhicule pendant le fonctionnement.

9. Système de traitement d'objet, notamment pour traiter des objets tels que des bagages (65, 82) ou des articles similaires tels que des colis, comprenant
- une zone de transport (99) avec une surface au sol au moins sensiblement plate,
- un nombre de véhicules à commande automatique (1) selon la revendication 8 qui peuvent chacun circuler sur la surface au sol,
- une unité de commande centrale (93) pour commander chacun du nombre de véhicules (1) de sorte qu'un objet puisse être transporté avec un véhicule (1) depuis un emplacement d'alimentation dans la zone de transport (99) jusqu'à un autre emplacement à une distance de celui-ci dans la zone de transport (99),
- un convoyeur d'alimentation (80) qui débouche avec une extrémité extérieure aval de celui-ci à l'emplacement d'alimentation et qui, à l'extrémité extérieure aval, est dégagé de la surface au sol de sorte qu'un véhicule (1) puisse circuler en dessous, dans lequel le système de traitement d'objet est configuré pour réaliser le procédé selon l'une quelconque des revendications 1 à 7.
